Europäisches Patentamt

European Patent Office

Office européen des brevets

(19)

(11) Publication number: **0 034 135**
**B1**

# EUROPEAN PATENT SPECIFICATION

(12)

(45) Date of publication of patent specification: **12.09.84**

(21) Application number: **81850020.9**

(22) Date of filing: **09.02.81**

(51) Int. Cl.³: **F 16 M 7/00,** F 24 C 15/08,
F 24 H 9/02, A 47 B 77/08,
F 16 M 13/00

(54) Household appliance.

(30) Priority: **08.02.80 SE 8001017**

(43) Date of publication of application:
**19.08.81 Bulletin 81/33**

(45) Publication of the grant of the patent:
**12.09.84 Bulletin 84/37**

(84) Designated Contracting States:
**DE FR GB**

(56) References cited:
**CH-A- 500 427**
**DE-A-2 100 328**
**DE-B-1 087 568**
**FR-A-2 125 677**
**GB-A-2 015 334**
**LU-A- 59 875**
**US-A-1 694 000**
**US-A-1 956 662**
**US-A-2 769 440**

(73) Proprietor: **AKTIEBOLAGET ELECTROLUX**
**Luxbacken 1**
**S-105 45 Stockholm (SE)**

(72) Inventor: **Jonasson, Alf Inge Sören**
**Mejerigatan 4**
**S-552 66 Jönköping (SE)**

(74) Representative: **Hagelbäck, Evert Isidor et al**
**c/o AB Electrolux Patentavdelningen**
**S-105 45 Stockholm (SE)**

Courier Press, Leamington Spa, England.

## Description

The present invention relates to a household appliance in the form of a machine, stove, or the like, especially a base included in said appliance which is positioned on the floor aligned with a work bench.

A base consists usually of a frame with four sides on which wheels or sliding feet are mounted. The base is primarily used for supporting said appliance, but may also be a height adjusting means by which an inclination or irregularity in the floor can be eliminated. It is, however, impossible to reach the rear feet for adjustment, if the base is a frame and the appliance is pushed in between e.g. a couple of cabinets. It is therefore desirable to produce a more flexible base in which one of the sides can be removed and the adjustment carried out on all feet through an opening in the base. US—A—2,769,440 discloses a household appliance with a sheet metal frame structure, wherein the front piece of the base forms displaceable drawers.

In prior art it is further known to make support units of tube structures with adjustable feet, as described in GB—A—2,015,334, or tubes with downwardly bent ends, as described in DE—B—1,087,568. However, these units are intended for tables.

By the present invention in accordance with the following claims a base for a domestic appliance is provided having four adjustable feet which support an open tube structure. The feet are long enough for adjusting the appliance into several standard heights. The tubes of the base structure form a cross.

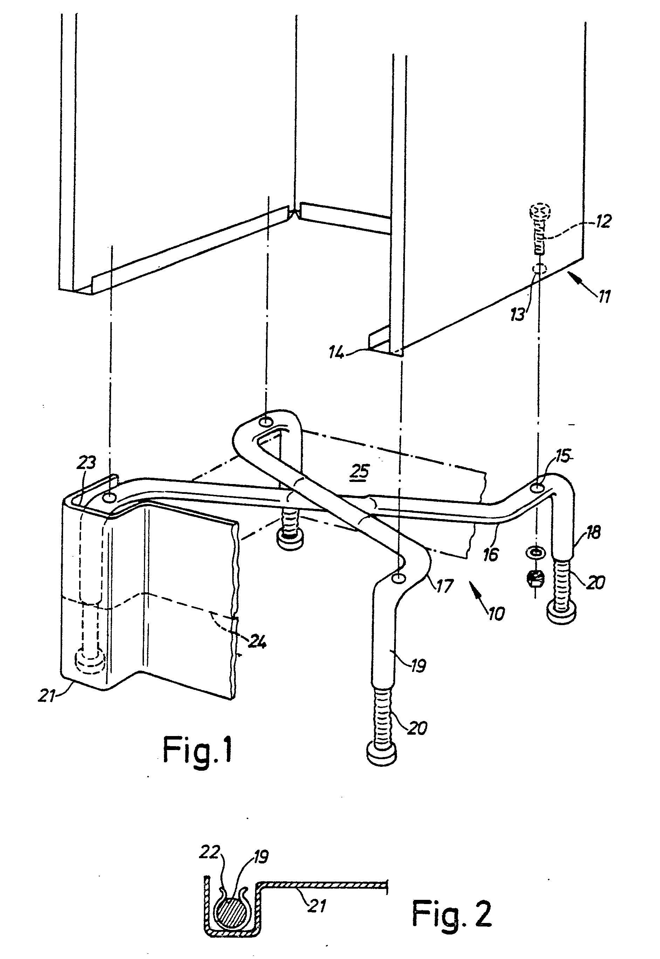

An embodiment of an appliance with a base according to the invention is described in the following with reference to the accompanying drawing, which shows in fig. 1 an exploded view of the base and a plate envelope of said appliance and fig. 2 a sectional view of a fastening detail of the front piece of the base.

A base 10 of a stove or the like 11 having a plate envelope shown above the base is shown in fig. 1. The envelope and the base are normally joined by means of screws 12 entered into holes 13 through a flange 14 of the envelope and drilled holes 15 in the base. The base is made of bent tubes 16, 17 which are crossed and have ends 18, 19 bent downwards. At the cross point the tubes are interconnected by means of welding, soldering or the like, thus forming a stable framework. In the centre of the framework the tubes are bent somewhat up- and down, respectively, so that all the corners of the framework are positioned in one and the same plane. The downwardly bend ends 18, 19 are internally threaded to receive threaded parts of feet 20, which are thus vertically adjustable. When a threaded part is screwed up or down in its hole in the tube end the height of the corresponding corner above the floor is altered so that a height adjustment thereby will occur.

The base is completed with a front piece 21 which is attached to the front legs of the rack by means of a clamp 22 (fig. 2). The clamp is positioned in a pocket 23 formed in the plate constituting the front piece. This plate is easy to remove and attach without tools as it is kept in place by means of these clamps. The front piece is shown in full height on the drawing which corresponds to the highest standard height of kitchen bench cabinets. For a lower standard height a lower front piece is used. This can be achieved from the shown piece by dividing the same. The front piece is therefore conveniently provided with a break line 24, where it is easy to break so that one of the pieces then constitutes the said lower front piece. The base can also be completed with another plate member 25 in the shape of three walls which cover the other three sides of the base.

The embodiment now described can be considered an example which realizes the invention. Also variations of this embodiment are possible, the clamps may e.g. be replaced by other fastening means, such as screws, hooks, etc. and the feet by link rollers. When using the storage room within the base this room may be provided with a drawer.

## Claims

1. A household appliance in the form of a stove, a machine, or the like, including a base (10) with a removable front piece (21), characterized in that the base (10) is comprised of tubes (16, 17) having fixing points (15) to a body, an envelope or the like, of the appliance, and downwardly bent tube ends (18, 19) into which feet (20) are adjustably screwed, said tubes forming a cross and inter-connected in the cross point.

2. A household appliance according to Claim 1, characterized in that the front piece (21) has a longitudinal break line (24) facilitating division of the piece.

3. A household appliance according to Claim 2, characterized in that around the other three vertical sides of the base plate walls (25) are disposed enclosing a storage room within the base.

4. A household appliance according to Claim 3, characterized in that the plate walls (25), the front piece (21) and a bottom form a displaceable drawer in the base (10).

## Patentansprüche

1. Haushaltsvorrichtung in Form eines Herds, einer Maschine oder ähnlichem, die ein Untergestell (10) mit einem abnehmbaren Frontteil (21) aufweist, dadurch gekennzeichnet, daß das Untergestell (10) Rohre (16, 17) aufweist, die Punkte (15) zur Befestigung an einem Gehäuse, einer Verkleidung oder ähnlichem besitzen, sowie nach unten gebogene Rohrenden (18, 19), in die Füße (20) einstellbar eingeschraubt sind, wobei die Rohre kreuzweise angeordnet und am Kreuzungspunkt miteinander verbunden sind.

2. Haushaltsvorrichtung nach Anspruch 1, dadurch gekennzeichnet, daß das Frontteil (21) eine durchgehende Perforation (24) aufweist, entlang der das Teil bei Bedarf geteilt wird.

3. Haushaltsvorrichtung nach Anspruch 2, dadurch gekennzeichnet, daß an den anderen drei senkrechten Seiten des Untergestells Blechwände (25) angebracht sind, die einen Stauraum innerhalb des Untergestells bilden.

4. Haushaltsvorrichtung nach Anspruch 3, dadurch gekennzeichnet, daß die Blechwände (25), das Frontteil (21) und ein Bodenteil eine herausnehmbare Schublade im Unterteil bilden.

## Revendications

1. Dispositif domestique tel qu'un fourneau, une machine, ou appareil similaire, comprenant une base (10) munie d'une pièce frontale amovible (21), caractérisé en ce que la base (10) est constituée de tubes (16, 17) ayant des points d'ancrage (15) à un corps, une enveloppe ou similaire, du dispositif, et d'extrémités de tubes pliées vers le bas (18, 19) dans lesquelles des pieds (20) sont vissés de manière adjustable, les dits tubes (16, 17) formant une croix et étant interconnectés au point de croisement.

2. Dispositif domestique suivant la revendication 1, caractérisé en ce que la pièce frontale (21) présente une ligne de coupe (24) longitudinal qui facilite la division de la pièce.

3. Dispositif suivant la revendication 2, caractérisée en ce qu'autour des trois autres côtés verticaux de la base sont disposées des plaques murales (25) délimitant un espace de rangement à l'intérieur de la base.

4. Dispositif suivant la revendication 3, caractérise en ce que les plaques murales (25), la pièce frontale (21) et un fond forment un tiroir déplaçable dans la base (10).

Fig.1

Fig. 2